Europäisches Patentamt

European Patent Office

Office européen des brevets

(19)

(11) Publication number: 0 219 349
A1

## (12) EUROPEAN PATENT APPLICATION

(21) Application number: 86307968.7

(22) Date of filing: 15.10.86

(51) Int. Cl.4: F 16 L 19/03
F 16 L 19/00, F 16 L 17/06

(30) Priority: 16.10.85 US 788050

(43) Date of publication of application:
22.04.87 Bulletin 87/17

(84) Designated Contracting States:
BE DE FR GB GR IT LU NL

(71) Applicant: CAJON COMPANY
9760 Shepard Road
Macedonia Ohio 44056 (US)

(72) Inventor: Babuder, Gerald Alan
8807 Yorkwood Court
Mentor Ohio 44060 (US)

Weigl, Jeffrey Lee
216 W. Highland Road
Northfield Centre Ohio 44067 (US)

(74) Representative: Jones, Colin et al
W.P. THOMPSON & CO. Coopers Building Church Street
Liverpool L1 3AB (GB)

(54) Fluid coupling.

(57) For maintaining an annular sealing gasket (122) in some predetermined position between and substantially coaxial with opposed annular sealing beads (36', 56') extending axially from each of a pair of coupling components (10', 12') a plurality of axial retaining legs (124) are formed integrally with the gasket body (122). The retaining legs (124) facilitate mounting to one of the coupling components (10', 12') so that the gasket (122) body is captured substantially coaxial with the one coupling component (10') and with the associated sealing bead (36') engaging one of the gasket faces. The legs (124) are positioned circumferentially about the gasket body (122) for engaging the one coupling component (10') coaxial with the associated sealing bead (36'). The arrangement accommodates precise positioning of the gasket (122) relative to the coupling components (10', 12') at initial coupling makeup and does not interfere with the coupling components (10', 12') themselves. Precise repositioning of the gasket (122) relative to the component sealing beads (36', 56') during subsequent dismantling and reassembly of the coupling is enabled.

Fig 4

**Description**

FLUID COUPLING.

This invention relates to fluid couplings and, more particularly, to a type of coupling suitable for use in both pressure and vacuum applications.

A wide variety of fluid couplings is available for use with both high and low temperatures and in both high pressure and vacuum environments. One such coupling which has found significant commercial acceptance is described in US-A- 3,521,910. In this coupling, a pair of coupling components is provided which have fluid passageways extending longitudinally therethrough. A generally annular rib or sealing bead extends axially outwardly from the end face of each coupling component in a surrounding relationship with the associated fluid passageway. The components themselves are adapted to be placed in an end-to-end relationship so that the sealing beads are disposed in opposed relation to each other. A generally annular sealing gasket is interposed between the sealing beads, and means are advantageously provided for drawing the components axially towards each other in order that the sealing beads will sealingly engage the opposed faces of the gasket. During assembly or makeup of the coupling, the sealing beads produce slight indentations in the gasket faces.

While the foregoing coupling construction has indeed met with substantial commercial success and has provided improved coupling capabilities over a wide range of system and operating parameters, one difficulty which has been encountered resides in precisely positioning the annular gasket between the annular scaling beads at initial coupling makeup and at subsequent reassembly after disassembly. Because of the basic construction involved, it has been found that the gasket is not always substantially coaxially disposed with the annular sealing beads. This result may, to some extent, adversely affect the overall sealing results. Moreover, and while the sealing beads produce only slight indentations in the gasket at coupling makeup, it is necessary to reposition the gasket precisely when the coupling is disassembled and then reassembled.

Because of problems encounted in achieving the necessary precise repositioning, it has heretofore been the practice simply to insert a new gasket each time the coupling was disassembled and then reassembled. While no particularly great expense is involved by replacing the gaskets, it necessarily requires that maintenance personnel, installers, and the like maintain a ready supply of gaskets in various sizes when working in the field. Such requirement is considered undesirable for many installations and users of the coupling.

Accordingly, it has been considered desirable to develop an arrangement which would facilitate positive mounting of the gasket relative to the coupling components and sealing beads in order that precise positioning of the gasket would be assured. Moreover, such an arrangement would advantageously facilitate precise repositioning of the gasket at subsequent disassembly and reassembly of the coupling to eliminate the need for gasket replacement as per the prior accepted practice.

The present invention contemplates an improved arrangement which provides an improved coupling construction which accommodates precise location of a sealing gasket between a pair of opposed annular sealing beads in a fluid coupling construction.

In GB-A-2126301 there is described a fluid coupling in which an annular sealing gasket is interposed between annular sealing beads on radial end faces of the coupling components and in which a separate retainer is provided for maintaining the gasket in position on one of the components when the components are disassembled. The retainer has retaining legs which extend outwardly from an annular end wall and the gasket is captured between this end wall of the retainer and the sealing bead on the respective coupling component. The retaining legs are received by a cylindrical outer surface on the one coupling component to hold the retainer on that component. The inside diameter of the annular end wall is greater than the outside diameter of the sealing beads so that the retainer does not interfere with the sealing function when the coupling components are assembled.

Because the retainer is an additional component, the coupling becomes more complicated to assemble and the retainer serves no purpose in the coupling as assembled. It is therefore desirable to do away with this additional component.

According to one aspect of the present invention, a fluid coupling comprising first and second coupling components with respective generally annular sealing beads on opposed end faces of the components, an annular gasket body interposed between the opposed end faces and means for clamping the coupling components together so that the sealing beads sealingly engage respective seal face areas of the gasket body, the coupling further comprising axially extending gasket retaining legs biassed against an engagement area on the first component to hold the gasket body in position on the first component when the coupling is dismantled, is characterised in that the retaining legs are formed integrally with the gasket body and extend from the outer periphery thereof.

According to another aspect of the present invention, a fluid coupling having first and second generally cylindrical coupling components including fluid passageways extending longitudinally thereof, said components having opposed radial end faces with generally annular sealing beads extending axially therefrom towards each other with an annular gasket body interposed therebetween, said coupling further including an open-ended coupling member screw-threaded from one end thereof towards the other for screw-threaded engagement with the second coupling component or with a second coupling member for moving said components into a close-spaced subtantially coaxial relationship such that said sealing beads will sealingly engage opposite face areas of said gasket body, said coupling also including a plurality of retaining legs extending in a direction generally normal to said gasket body in a retaining relationship with an engagement area on said first component spaced axially rearwardly from the associated radial end face, whereby said gasket body is positively located in a generally coaxial relationship with said components when they are moved towards said closely-spaced relationship by said coupling member and said sealing beads each engage substantially the same portion of the respective gasket face area during subsequent dismantling and reassembly of the coupling, said other end of the coupling member having a radially inwardly directed shoulder which drivingly engages a radially outwardly directed flange on the first coupling component and the engagement area lying between the flange and the radial end face of the first component and having a diameter greater than the maximum radial extent of the sealing beads but less than the outer diameter of said flange, is characterised in that the retaining legs are formed integrally with the retainer body.

The gasket body is disposed in a substantially coaxial relationship with the components as they are moved towards a closely-spaced relationship with each other by the moving means. Also, the retainer legs assure that the sealing beads engage substantially the same annular areas of the gasket body during subsequent coupling disassembly and reassembly steps. In addition, the retainer legs are particularly advantageous when the coupling is installed in a vertical position or in a position where the coupling is hard to reach or see. The retainer legs hold the gasket body in position even when the coupling components are disassembled or mounted vertically. Similarly, the gasket does not have to be held in place manually while the coupling components are being assembled.

Preferably, the retainer legs effectively define a coupling component-engaging band dimensioned so that the retainer legs are biased radially outwardly as the gasket is installed on the one component.

Such arrangement facilitates reuse of the gasket upon subsequent disassembly and reassembly of the coupling.

The gasket retaining arrangement does not in any way interfere with in impair the sealing achieved between opposed sealing components.

The invention is further described, by way of example, with reference to the accompanying drawings, in which:

Fig. 1 is an exploded side elevational view of a fluid coupling in accordance with the present invention;

Fig. 2 is an enlarged, exploded cross-sectional view of a portion of the coupling shown in Fig. 1;

Fig. 3 is an end view of a combined gasket and retainer used in the Fig. 1 embodiment; and

Fig. 4 is a partial., further enlarged cross-sectional view of the coupling of Fig. 1 in the assembled condition.

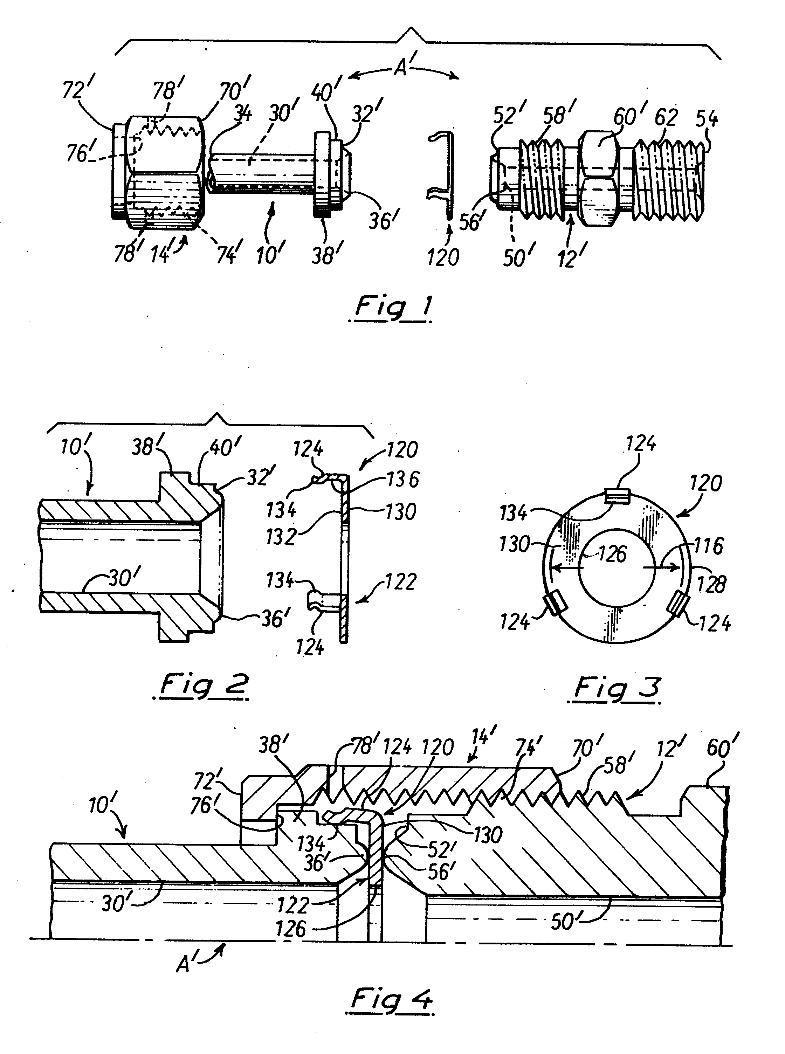

Referring now to the drawings wherein the showings are for purposes of illustrating a preferred embodiment of the invention only and not for purposes of limiting same, Fig. 1 shows a fluid connector or coupling A whose basis construction is known in the art as shown in US-A-3,521,910.

More particularly, and with reference to both Figs. 1 and 2, connector or coupling A' is comprised of a first coupling component 10' a second coupling component 12, a coupling nut 14', and a combined gasket and retainer 120 having a gasket body 122.

First coupling component 10 includes a fluid passageway 30' extending longitudinally therethrough between a radial inner or end face 32' and an outer or terminal end 34. While terminal end 34 may include any convenient means for affixing coupling component 10' to a fluid line, a male or female tube-receiving area (not shown) is contemplated in the embodiment here described. However, any other conventional arrangement, such as threaded connecting means, ferrule-type tube couplings, and other arrangements may also be suitably employed.

An annular, radiused sealing bead or rib 36' extends axially outward from radial end face 32' in a coaxial relationship with passageway 30' to effect a sealing relationship with a gasket body 122 in a manner to be described. A circumferential locating or mounting flange 38' is spaced axially along first coupling component 10' some predetermined distance from end face 32'. A cylindrical area 40' having a diameter less than that of flange 38' and greater than the outside diameter of sealing bead 36' is disposed axially between end face 32' and the flange. The reasons and purposes for this configuration will become apparent hereinafter.

Second coupling component 12' includes a fluid passageway 50' extending longitudinally thereof between a radial inner or end face 52' and an outer or terminal end 54. An annular, radiused sealing bead 56, which is substantially identical to bead 36', extends axially outwardly of radial end face 52' in a coaxial relationship with the passageway 50'. As shown in Fig. 1, second coupling component 12' includes a threaded area 58' rearwardly adjacent end face 52' for threaded cooperation with nut 14', an intermediate, slightly enlarged hexagonal tool-receiving area 60', and a threaded area 62 adjacent outer or terminal end 54. In the embodiment shown, threaded area 62 comprises pipe threads for conveniently securing the connector to associated or adjacent structure.

It will be readily appreciated, however, that other configurations for second coupling component 12' may also be advantageously employed. Moreover, alternative arrangements may be suitably employed in place of threaded area 58' for purposes of drawing sealing beads 36', 56' towards each other into sealing engagement with gasket body 122 and in place of threaded area 62 for mounting the coupling to associated structure or to a fluid line. One alternative comprises a pair of opposed glands wherein each gland is configured similarly to the one shown as first coupling component 10' in the Fig. 1. In this case, a separate male nut is associated with one gland and a separate female nut is associated with the other gland. These nuts, in turn, threadably mate with each other to draw the glands into sealing engagement with the gasket. Still other alternative arrangements include tees, crosses, elbows, unions, and the like.

Coupling nut 14' comprises an open-ended structure having a forward end 70' and a rear end 72' with the interior of the nut being threaded as at 74' from the forward towards the rear end. Threads 74' mate with threads 58' on second coupling component 12' for drawing components 10', 12' towards each other in a manner to be described. A radially inwardly extending shoulder 76' is disposed at the rear end 72 of the nut and has an inside diameter which is smaller than the outside diameter of circumferential flange 38' on coupling component 10'. Thus, shoulder 76' may act against flange 38' as an engaging and retaining means for the first coupling component as will be described. A pair of generally opposed leak test ports 78' radially penetrate the side wall of the nut for reasons well known in the art.

With particular reference to Figs. 2 and 3, the combined gasket and retainer 120 comprises an annular gasket body 122 having generally opposed face areas 130, 132 with an inner opening 126 and an outer peripheral circular edge 128. The inside diameter of the opening 126 is approximately equal to the diameter of the passageways 30' and 50'. The outer diameter of the gasket body 122 is greater than the diameter of the engaging area 40' and at least slightly less than the outer diameter of the flange 38'.

In accordance with the present invention, and with particular reference to Figs 2 and 3, the retainer means of the combined gasket and retainer are advantageously provided for mounting gasket body 122 on first component 10' in a precise location between the sealing beads 36', 56' when the coupling is assembled. Extending outwardly from the outer or free edge of gasket body 122 are a plurality of substantially identical retaining legs 124. As shown in Figs 2 and 3, the preferred embodiment of the invention contemplates use of three equidistantly spaced-apart legs, although a different number or different relative spacing could also be employed satisfactorily. Each of the retaining legs 124 includes an engaging means or area 134 adjacent the outer terminal end thereof. As shown, these engaging means are somewhat U-shaped and shaped so that the base area of each is disposed radially inwardly of the associated leg 124. Each of areas 134 has an arcuate shape thereacross between the opposite side edges of the associated leg 124 so that at least some line contact is made circumferentially of engagement area 40' when the combined gasket and retainer is installed.

The legs 124 are formed integrally with gasket body 122 and extend generally perpendicular to the seal surfaces 130, 132. In addition, the radial distance to surface areas 134 from the axis of opening 126 is preferably slightly less than the radius of area 40'. The radius from the axis of opening 126 to the inner surface 136 of legs 124 is preferably slightly greater than the radius of area 40'. Thus, when the assembly 120 is in the installed position shown in Fig. 4, the legs 124 are deflected radially outward a slight amount generating a radially inward directed gripping force between areas 134 and area 40'.

Other forms of engaging means may also be satisfactorily employed. For example, generally V-shaped, arcuate shaped, or still other shapes may be used in place of the generally U-shape as necessary and/or desired. Such modifications do not in any way depart from the scope of the present invention.

U-shaped engaging means 134 define, in combination with each other, an engaging band or zone. The diameter 116 of this zone is slightly less than the diameter of the portion 40' of first component 10'. Still further, the length of legs 124 is such that, when the combined gasket and retainer 120 is installed on component 10', the outermost or terminal ends of the legs will be disposed in a non-contacting relationship with flange 38'.

Fig. 4 shows the coupling of Fig. 1 in an assembled condition with the combined gasket and retainer cooperatively installed therein. At the time of assembly, the combined gasket and retainer is installed onto component 10' by radially positioning it generally coaxial with the component and then axially inserting the retainer means thereonto with engaging means 134 frictionally engaging area 40'. Because diameter 116 (Fig. 3) is less than the diameter of area 40', legs 124 will be urged radially outwardly so that a biasing type of retaining force will continuously be exerted on surface 40'. The gasket body 122 is thus substantially coaxially mounted on component 10' so as to overlie sealing bead 36'.

In addition to securing body 122 to component 10', the U-shaped or arcuate shape of engaging means 134 is desirable for other reasons. First, the radially outwardly extending nature of the engaging means adjacent the ends of the legs renders it somewhat easier to install the retainer means onto coupling component 10'. Second, the arcuate shape reduces the likelihood of inadvertently contacting sealing bead 36' during installation. Such contact may scratch or mar the sealing bead and adversely affect the sealing relationship with gasket body 122.

Coupling nut 14' may then be advanced onto component 12' by means of threaded engagement between threaded areas 74', 58'. Advancement of the nut onto component 12' thus effectively draws components 10', 12' coaxially towards each other until sealing beads 36', 56' sealingly engage the opposed faces of gasket body 122. Retainer legs 124 advantageously maintains a coaxial location for the gasket body with the sealing beads during this fitting makeup process.

In the particular fitting construction here under discussion, coupling components 10', 12' and coupling nut 14' are typically manufactured from stainless steel. Combined gasket and retainer 120, in turn, is constructed from nickel or the like. In addition, other materials may also be suitably employed for the coupling components and gasket to achieve desired results in a wide variety of different environments. At the time of fitting makeup in the manner shown by Fig. 4, sealing beads 36', 56' will produce slight annular indentations in the opposite faces of the gasket body 122.

Even with such slight indentations, and upon disassembly of the fitting for maintenance or like purposes, it is necessary to realign the gasket body coaxially with sealing beads 36', 56' when the coupling is reassembled. If substantial realignment is not obtained, undesired leakage could occur. Heretofore, a new gasket was inserted into the coupling each time the coupling was disassembled and then reassembled. The necessity for this action has been considered undesirable, particularly when working in the field.

However, by using combined gasket and retainer 120 in the manner described above, gasket body 122 is always maintained in the preselected position substantially coaxial with sealing beads 36', 56'. Even when the coupling is disassembled and later reassembled, the retainer assures that the gasket body is automatically coaxially realigned with the annular sealing beads thereby to prevent the potential for coupling leaks due to gasket misalignment. As a result, the necessity or desirability for installing a new gasket is successfully overcome.

The particular spatial relationships described above with reference to Fig. 3 assure that the retainer means will in no way interfere with the cooperative sealing relationships between the coupling components themselves. For example, the external diameter defined by the retainer legs 124 is such that they will not interfere with the inside wall of coupling nut 14'. The U-shaped engaging means 134 engage area 40' with line contact over short accurate spans and cumulatively define an engaging band or zone which assures good frictional engagement with area 40'.

The total length of legs 124 from face area 132 is less than the axial distance from the outermost end or apex of bead 36' to flange 38'. Thus, when the coupling is fully made-up, and full engagement is achieved between the beads 36', 56' and gasket seal face areas 132, 130, respectively, the ends of the legs 124 do not engage flange 38'.

The combined gasket and retainer 120 may comprise a stamping or the like formed of a suitable metal. Additionally, the gasket faces can be given additional treatment, such as plating to improve the sealing characteristics under certain conditions.

When the coupling is disassembled and reassembled the retaining legs assure that the gasket body is coaxially realigned with the sealing beads thereby to prevent potential leaks due to misalignment.

The invention has been described with reference to preferred embodiments. Modifications and alterations are possible and are included insofar as they come within the scope of the claims.

## Claims

1. A fluid coupling comprising first and second coupling components (10', 12') with respective generally annular sealing beads (36', 56') on opposed end faces (30', 50') of the components (10', 12'), an annular gasket body (122) interposed between the opposed end faces (30', 50') and means (14') for clamping the coupling components (10', 12') together so that the sealing beads (36', 56') sealingly engage respective seal face areas (132, 130) of the gasket body (122), the coupling further comprising axially extending gasket retaining legs (124) biassed against an engagement area (40') on the first component (10') to hold the gasket body (122) in position on the first component (10') when the coupling is dismantled, characterised in that the retaining legs (124) are formed integrally with the gasket body (122) and extend from the outer periphery thereof.

2. A fluid coupling having first and second generally cylindrical coupling components (10', 12') including fluid passageways (30', 50') extending longitudinally thereof, said components having opposed radial end faces (32', 52') with generally annular sealing beads (36', 56') extending axially therefrom towards each other with an annular gasket body (122) interposed therebetween, said coupling further including an open-ended coupling member (14') screw-threaded from one end (70') thereof towards the other (72') for screw-threaded engagement with the second coupling component (12') or with a second coupling member for moving said components (10', 12') into a close-spaced substantially coaxial relationship such that said sealing beads (36', 56') will sealingly engage opposite face areas (132, 130) of said gasket body (122), said coupling also including a plurality of retaining legs (124) extending in a direction generally normal to said gasket body (122) in a retaining relationship with an engagement area (40') on said first component (10') spaced axially rearwardly from the associated radial end face (32'), whereby said gasket body (122) is positively located in a generally coaxial relationship with said components (10', 12') when they are moved towards said closely-spaced relationship by said coupling member (14') and said sealing beads (36', 56') each engage substantially the same portion of the respective gasket face area (132, 130) during subsequent dismantling and reassembly of the coupling, said other end (72') of the coupling member (14') having a radially inwardly directed shoulder which drivingly engages a radially outwardly directed flange (38') on the first coupling component (10') and the engagement area (40') lying between the flange (38') and the radial end face (32') of the first component (10') and having a diameter greater than the maximum radial extent of the sealing beads (36', 56') but less than the outer diameter of said flange (38'), characterised in that the retaining legs (124) are formed integrally with the retainer body (122).

3. A coupling according to claim 2, in which the outer diameter of the gasket body (122) is at least slightly greater than the diameter of said engagement area (40') and less than the outer diameter of said flange (38').

4. A coupling according to claim 2 or 3, in which the legs (124) each have gripping means (134) spaced therealong for frictionally engaging said engagement area (40').

5. A coupling according to claim 4, wherein said gripping means comprises generally U-shaped areas (134) with faces disposed radially inward of said legs (124) to define a gripping band having a diameter (116) at most slightly less than the diameter of the engagement area (40').

6. A coupling according to claim 5, in which said faces of said U-shaped areas (134) have an arcuate shape laterally between the opposed side edges of the legs (124).

_Fig_1_

_Fig_2_

_Fig_3_

_Fig_4_

| DOCUMENTS CONSIDERED TO BE RELEVANT | | | EP 86307968.7 |
|---|---|---|---|
| **Category** | Citation of document with indication, where appropriate, of relevant passages | Relevant to claim | **CLASSIFICATION OF THE APPLICATION (Int. Cl.4)** |
| D,X | <u>DE - A1 - 3 330 443</u> (CAJON CO.)=<br><u>GB - A - 2 126 301</u><br>  * Totaltiy *<br>    -- | 1-6 | F 16 L 19/03<br>F 16 L 19/00<br>F 16 L 17/06 |
| A | <u>US - A - 4 540 205</u> (WATANABE)<br>  * Totality *<br>    -- | 1,2 | |
| A | <u>US - A - 4 316 624</u> (DAVLIN)<br>    -- | | |
| A | <u>CH - A - 553 940</u> (E. DUNKEL)<br>    ---- | | |
| | | | **TECHNICAL FIELDS SEARCHED (Int. Cl.4)**<br><br>F 16 L 15/00<br>F 16 L 17/00<br>F 16 L 19/00 |

The present search report has been drawn up for all claims

| Place of search | Date of completion of the search | Examiner |
|---|---|---|
| VIENNA | 09-12-1986 | SCHUGANICH |